# EUROPEAN PATENT SPECIFICATION

(11) **EP 2 243 293 B1**
(45) Date of publication and mention of the grant of the patent: **14.08.2013**
(21) Application number: 08789609.8
(22) Date of filing: 14.08.2008
(51) Int. Cl.: H04N 21/2668, H04N 21/458

(54) **ADVERTISEMENT SHIFTING SYSTEM**
WERBUNGSVERSCHIEBUNGSSYSTEM
SYSTÈME DE CHANGEMENT DE PUBLICITÉ

(30) Priority: 13.02.2008 US 65562 P
(43) Date of publication of application: 27.10.2010
(73) Proprietor: NDS Limited, Staines, Middlesex TW18 4EX (GB)
(72) Inventor: TSURIA, Yossi, 93390 Jerusalem (IL); ZUCKER, Arnold, 73127 Hashmonaim (IL)
(74) Representative: White, Duncan Rohan
(86) International application number: PCT/IB2008/053267
(87) International publication number: WO 2009/101488

(56) References cited:
- EP-A- 1 729 466
- EP-A- 1 798 977
- WO-A-2007/052180
- WO-A-2007/071282
- WO-A-2007/078847
- US-A1- 2005 108 091

## Description

### BACKGROUND OF THE INVENTION

Time shifting advertisements, where viewing an advertisement at a later time than when it is broadcast, is known in the art From the point of view of the broadcaster, for whom advertisements represent an important source of revenue, it is preferable that a viewer time shifts the advertisement rather than fast forward the advertisement in order to avoid watching the advertisement.

The following patents and patent applications are believed to reflect the state of the art:
WO 2004/027538 of NDS ltd.;
WO 01/52541 ofNDS ltd.;
KR 4104975 of LG Electronics Inc.;
US 5,664,948 of Dimitriadis et al.;
US 6,236,330 of Cohen; and
US 2006/0136297 of Willis, et al.

### SUMMARY OF THE INVENTION

There is thus provided in accordance with an embodiment of the present invention a method for displaying device shifted content, the method including receiving at a first device, from a first source of content, a plurality of a first type of content items, receiving at a second device, from a second source of content, a plurality of a second type of content items, receiving at the second device, from a third source of content, at least one third type of content item, sending at least one third type of content item and at least one second type of content item from the second device to the first device, and displaying at the first device at least one first type of content item, at least one second type of content item, and at least one third type of content item.

Further in accordance with an embodiment of the present invention the third type of content item includes an advertisement.

Still further in accordance with an embodiment of the present invention the advertisement includes at least one of video, text, and an image.

Additionally in accordance with an embodiment of the present invention the first device includes one of a digital picture frame, a monitor, a television, a mobile telephone, and an electronic book.

Moreover in accordance with an embodiment of the present invention the second device includes one of a digital picture frame, a monitor, a television, a mobile telephone, and an electronic book.

Further in accordance with an embodiment of the present invention the first type of content compromises null content.

Still further in accordance with an embodiment of the present invention the second type of content includes null content.

Additionally in accordance with an embodiment of the present invention the third source of content and the second source of content include the same source of content.

Moreover in accordance with an embodiment of the present invention the second source of content is in direct communication with the first device.

Further in accordance with an embodiment of the present invention the displaying at the first device of the one third type of content item includes, at least partially, displaying on demand.

Still further in accordance with an embodiment of the present invention and also including displaying on demand at the second device one of the one third type of content item.

Additionally in accordance with an embodiment of the present invention the displaying on demand includes requesting a content item of the third type at a first time and displaying the requested content item at a second, later, time.

Moreover in accordance with an embodiment of the present invention the first and the second device include the same device.

Further in accordance with an embodiment of the present invention the first device is operatively associated with a first display.

Still further in accordance with an embodiment of the present invention the receiving from the second source of content occurs via wired communication.

Additionally in accordance with an embodiment of the present invention the receiving from the second source of content occurs via wireless communication.

Moreover in accordance with an embodiment of the present invention the sending occurs via wired communication.

Further in accordance with an embodiment of the present invention the sending occurs via wireless communication.

Still further in accordance with an embodiment of the present invention the second type of content item includes a single frame of video.

Additionally in accordance with an embodiment of the present invention, after the second device receives the at least one third type of content item, the second device stores the at least one third type of content item on a second device associated storage device.

Moreover in accordance with an embodiment of the present invention the sending at least one third type of content item includes sending the at least one third type of content item from the second device associated storage device to the first device.

Further in accordance with an embodiment of the present invention the sending at least one third type of content item occurs episodically.

Still further in accordance with an embodiment of the present invention, after the third device receives the at least one third type of content item, the third device stores the at least one third type of content item on a third device associated storage device.

Additionally in accordance with an embodiment of the present invention the first device sends a report to the second device, the report including a list of times that the first device displays at least one third type of content item.

Moreover in accordance with an embodiment of the present invention the displaying the at least one third type of content item at the first device enables displaying the second type of content item at the second device with content items of the third type displayed at less than a regular frequency.

Further in accordance with an embodiment of the present invention the displaying the at least one third type of content item at the first device enables displaying future content items of the third type displayed at less than a regular frequency.

Still further in accordance with an embodiment of the present invention the displaying the at least one third type of content item at the first device enables displaying content items of the third type on either one of the first device or the second device at less than a regular frequency.

Additionally in accordance with an embodiment of the present invention the displaying the at least one third type of content item at the first device includes deferring the displaying the at least one third type of content item from a first time to a later time.

Moreover in accordance with an embodiment of the present invention the deferring the displaying the at least one third type of content item includes displaying, at the later time, at least a second one of the third type of content item.

Further in accordance with an embodiment of the present invention the deferring includes time sensitive deferring.

Still further in accordance with an embodiment of the present invention deferring the displaying invokes a requirement to acknowledge that the third type of content item has been viewed.

Additionally in accordance with an embodiment of the present invention the displaying the one third type of content item at the first device includes device sensitive displaying.

Moreover in accordance with an embodiment of the present invention the displaying the one third type of content item at the first device includes location sensitive displaying.

Further in accordance with an embodiment of the present invention the receiving at the second device, from a third source of content, at least one third type of content item includes receiving a first number of content items of the third type, and the displaying at the first device includes displaying a second number of content items of the third type, the second number being less than the first number.

There is also provided in accordance with another embodiment of the present invention a system for displaying device shifted content, the system including a first device which receives, from a first source of content, a plurality of a first type of content items, a second device which receives, from a second source of content, a plurality of a second type of content items, the second device further receives, from a third source of content, at least one third type of content item, the second device sends at least one third type of content item and at least one second type of content item to the first device, and the first device displays at least one first type of content item, at least one second type of content item, and at least one third type of content item.

### BRIEF DESCRIPTION OF THE DRAWINGS

The present invention will be understood and appreciated more fully from the following detailed description, taken in conjunction with the drawings in which:
Fig. 1 is a simplified partly pictorial partly block diagram illustration of an advertisement shifting system constructed and operative in accordance with a embodiment of the present invention;
Fig. 2 is a simplified depiction of one embodiment of the system of Fig. 1;
Fig. 3 is a simplified partly pictorial partly block diagram illustration of an alternative embodiment of the advertisement shifting system of Fig. 1;
Fig. 4 is a simplified depiction of an alternative embodiment of the advertisement shifting system as depicted in Fig. 3; and
Fig. 5 is a simplified flowchart of a method of operation of the present invention.

### DETAILED DESCRIPTION OF A PREFERRED EMBODIMENT

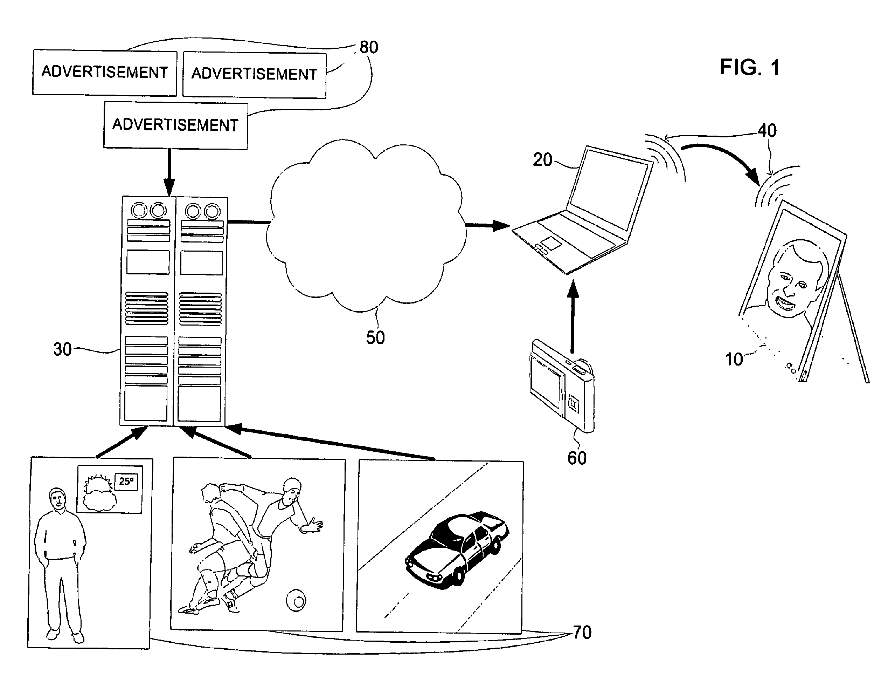

Reference is now made to Fig. 1, which is a simplified partly pictorial partly block diagram illustration of an advertisement shifting system constructed and operative in accordance with a preferred embodiment of the present invention.

One embodiment of the system of Fig. 1 comprises a display 10 and a home server 20 operative to provide digital pictures to the display 10. In addition, the home server 20 is also a client of a content provider 30, which provides the home server 20 with content. It is appreciated that the home server 10 may be a personal computer, a home media center, a set-top box or personal video recorder, or any other appropriate device. It is appreciated that the display 10 may comprise a digital picture frame, a monitor, a television, a mobile telephone, an electronic book, or other appropriate device which is operative to display content.

It is appreciated that the content provider 30 may be either of a satellite or a cable television broadcaster, an Internet content provider, or any other appropriate content provider 30 In a sub-combination of the elements of the system of Fig. 1, the home server may not be part of the system of Fig. 1. Rather, the display 10 is in communication with the content provider 30. The display 10 may be either in Ethernet communication with the content provider 30, or in communication with the content provider 30 via cable television cables, or via any other appropriate communications media. It is appreciated that although in Fig. 1 the display 10 and the home server 20 are depicted as communicating wirelessly 40, any appropriate communication media, wired or wireless, or a combination of the two, may be used. Likewise, even though the home server 20 and the content provider 30 are depicted as in communication over a network or the Internet 50, any appropriate communication media, wired or wireless, or a combination of the two may be used.

A first embodiment of the present invention is now described. The home server 20 accesses a plurality of user content 60. The user content 60 is depicted in Fig. 1 as a camera, in order to indicate that the user content 60 may be digital photographs. It is appreciated that the user content 60 may also comprise user created digital video clips, or any other appropriate user provided content.

The home server 20 selects and sends content from the user content 60 to the display 10 for displaying. In addition, at intervals of time, a content item 70 which has been provided by the content provider 30 to the home server 20 is also displayed on the display 10. At intervals of time, an advertisement 80 provided by the content provider 30, which has been received at the home server 20 is also displayed on the display 10.

The content item 70 may comprise a video clip; for example and without limiting the generality of the foregoing, the content item 70 may comprise a sports clip, a news clip, a music clip, or any other appropriate video content. Alternatively, the content item 70 may comprise null content; that is to say, there may be cases in which no content item 70 is displayed.

It is appreciated that the advertisement 80 is depicted and described as an "advertisement". However, any appropriate alternative content may, in fact, be sent from the content provider 30 to the home server 20 and displayed on the display 10. It is also appreciated that the advertisement may comprise any of video, text, an image, or any combination of video, text and images.

In one alternative embodiment of the present invention, the home server 20 may send a single frame (typically an I-frame) of the video clip to the display 10. The display 10 may then display the single frame as if the single frame were a still digital photograph.

In another alternative embodiment of the present invention, the home server 20 may be either entirely absent or partially absent. Specifically, the content provider 30 may be in direct communication with the display 10. More specifically, a user may notify the content provider 30 while the user content 60 is being broadcast, the content provider 30 may send the advertisement 80 directly to one of the display 10, the home server 20, or another device, such as a cell phone or PDA. Any appropriate feedback mechanism may be used for the user to notify the content provider 30 while the user content 60 is being broadcast.

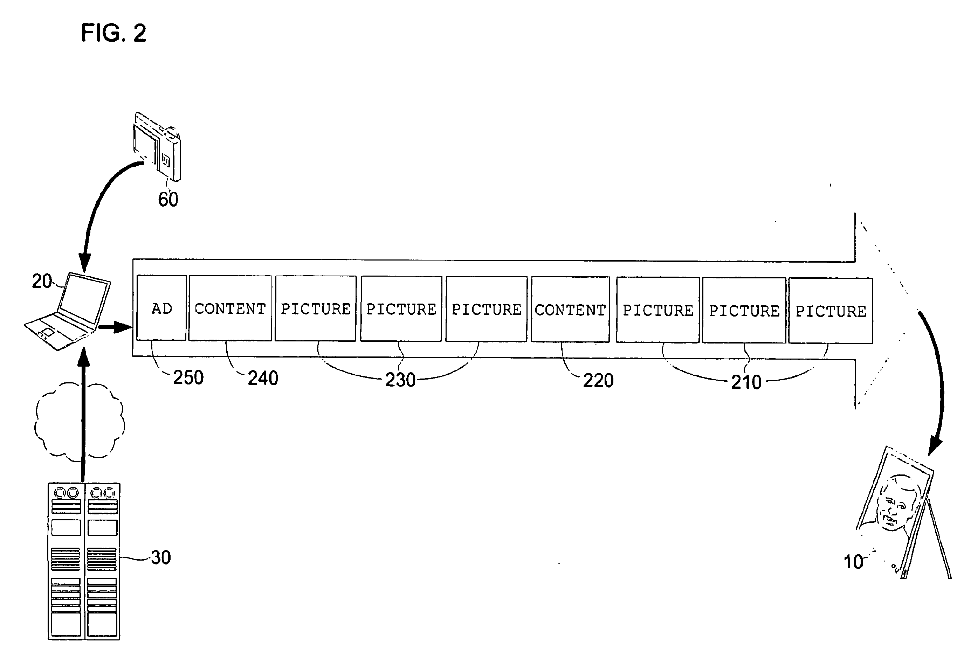

Reference is now made to Fig. 2, which is a simplified depiction of one embodiment of the system of Fig. 1. Fig. 2 depicts a stream of content from the home server 20 to the display 10 in the embodiment described above. A first series of pictures 210 (corresponding to the user content 60 of Fig. 1) are sent from the home server 20 to the display 10. The first series of pictures 210 is followed by a first content item 220 (corresponding to the content item 70 of Fig. 1), the first content item 220 originating at the content provider 30. The first content item 220 is then followed by a second series of pictures 230 (also corresponding to the user content 60 of Fig. 1). The second series of pictures 230 (also corresponding to the content item 70 of Fig. 1) is followed by a second content item 240, the second content item 240 originating at the content provider 30. The second content item 240 is followed by an advertisement (ad) 250 (corresponding to the advertisement 80 of Fig. 1), the advertisement 250 originating at the content provider 30.

It is appreciated that the number and sequence of pictures 230, content items 220, and advertisements 250 depicted in Fig. 2 is depicted purely by way of example, and is not meant to be limiting in any way.

Typically, the content provider 30 provides the content item 70 to the user as part of a business relationship between the content provider 30 and the user. The business relationship may be on a subscription basis, on a pay per view basis, on a free basis, or any other appropriate basis. As part of the business relationship, the content provider 30 provides the first content item 220 and the second content item 240 as well as the advertisement 250.

In an alternative embodiment of the present invention, the advertisement 80 may be received by the home server 20 and stored on a home server associated storage device, for example and without limiting the generality of the foregoing, a hard disk drive, flash drive, or other appropriate storage device. At at least one later time, the home server 20 sends the advertisement 80 to the display 10. In some embodiments of the present invention, the home server 20 sends the advertisement 80 to the display 10 episodically.

In another alternative embodiment of the present invention, the advertisement 80 may be received by the display 10 and stored on a display associated storage device, for example and without limiting the generality of the foregoing, a hard disk drive, flash drive, or other appropriate storage device.

In yet another alternative embodiment of the present invention, the display 10 may report each instance of displaying the advertisement 80 to the home server 20. The home server 20 in turn may relay the report, a portion of the report, or a collection of reports or portions thereof to the content provider 30. The content provider may then use information in such reports for gathering statistics, for billing a provider of the advertisement 80, or for any other appropriate use.

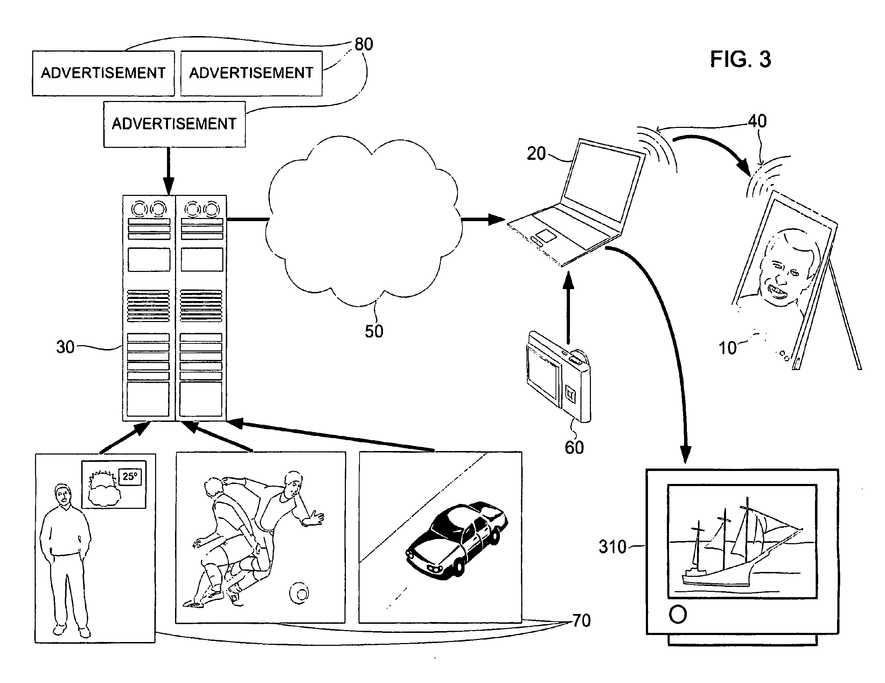

Reference is now made to Fig. 3, which is a simplified partly pictorial partly block diagram illustration of an alternative embodiment of the advertisement shifting system of Fig. 1. In the embodiment of the present invention depicted in Fig. 3, as part of the business relationship with the content provider 30, the user agrees to view content on a first viewing display, such as the display 10, and to view one or more advertisements on a second display, such as a television 310.

It is well known that one problem confronted by advertisers at the present time is advertisement skipping by consumers. For example and without limiting the generality of the foregoing, a viewer of a television program which has been recorded on a PVR will fast forward so as to avoid watching advertisements. Advertisers are, therefore, constantly looking for ways to ensure that advertisements are seen by viewers.

In the embodiment of the present invention depicted in Fig. 3, the display 10 is used to view the user content 60. The user is able to view television programming or other content, (such as the content item 70) on the television 310 or other appropriate display device. However, advertisements which would, in a classical viewing situation, have been viewed on the television 310 are now presented, instead, on the display 10. Thus, in the embodiment of the present invention depicted in Fig. 3, there is an incentive for the user to view the advertisement, as the advertisements are now displayed as part of a stream which also includes the user's user content 60.

In still another alternative embodiment of the present invention, the advertisement 80 may alternatively be viewed either in a time shifted fashion, in a device shifted fashion, or in both a time shifted and device shifted fashion. As discussed above, the user may elect to view the advertisement 80 on the display 10 instead of the television 310. Alternatively, the user may elect to time shift the advertisement, thereby viewing the advertisement 80 on the display 10 at a different time than the time the advertisement 80 is slated for viewing. The user may also elect to device shift the advertisement, thereby viewing the advertisement 80 on the display 10 instead of the television 310 at a different time than the time the advertisement 80 is slated for viewing. Alternatively, there might be a reward to the user in that opting to view an advertisement 80 at the present time may mean that the user views will be sent fewer advertisements for viewing for some duration, either on the display 10 or on the television 310.

If the user does opt to view the advertisement 80 in one or more of a time shifted or a device shifted fashion, there might be a tradeoff for the viewer. For instance, if there are 30 seconds of advertisements to be viewed the television 310 during a live broadcast, there might be 45 - 60 seconds of redirected commercials. The 45 - 60 seconds of redirected commercials may apply whether the redirected commercials comprise time shifted advertisements, display shifted advertisements, or both time shifted advertisements and display shifted advertisements.

In an embodiment where the content provider 30 may be in direct communication with the display 10, the advertisement 80 may be at least any one of time sensitive, location sensitive, or device sensitive. For example and without limiting the generality of the foregoing, if the advertisement 80 is time shifted from lunch time to breakfast time, an advertisement for hamburgers at a national hamburger chain may instead be replaced by an advertisement for eggs and muffins. Alternatively, if the advertisement 80 is device shifted to from being displayed on television 310 to being displayed on a cell phone, the advertisement 80 which is displayed may be related to cell phone service providers. Moreover, if the at least one of time or device shifted advertisement is being viewed, for example, at a sports club, the advertisement 80, which might have originally been for hygiene products might be replaced with a different advertisement, by way of example, for sporting goods.

Alternatively, if the user opts to both time shift and device shift the advertisement 80, the user might also be required to click a mouse button, press a cell phone key, or press a key on a remote control, by way of acknowledging that the advertisement 80 has, in fact, been viewed.

In still another embodiment of the present invention, a set of some number of advertisements may be sent to the user for viewing, and the user may be required to view fewer than the full number of advertisements, so long as the viewer acknowledges that the advertisements have, in fact, been viewed. For example and without limiting the generality of the foregoing, four advertisements may have been sent for viewing, but the user must acknowledge viewing of three of the advertisements.

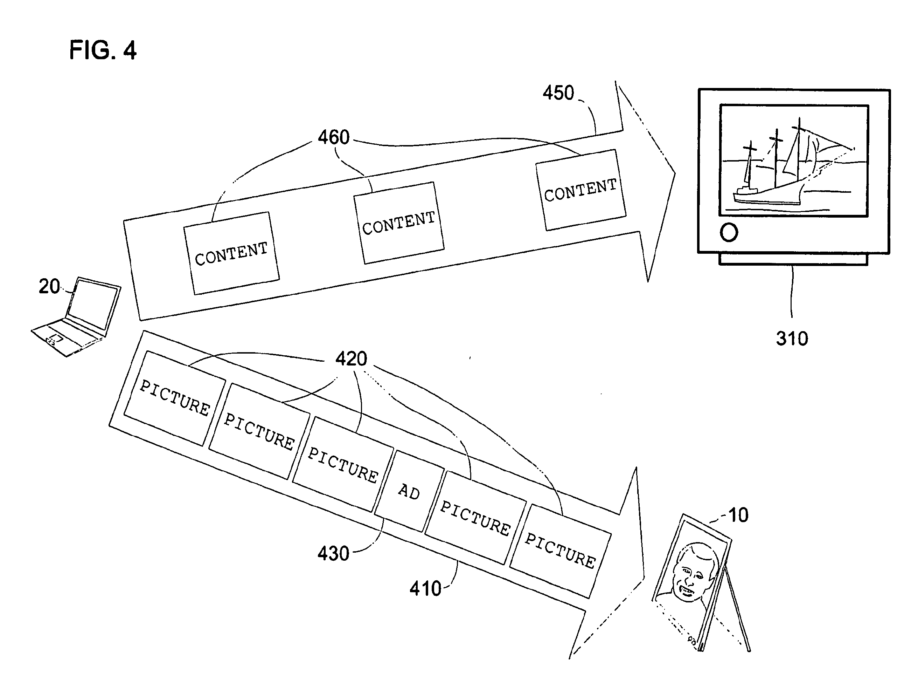

Reference is now made to Fig. 4, which is a simplified depiction of an alternative embodiment of the advertisement shifting system as depicted in Fig. 3. Fig. 4 depicts two streams of content from the home server 20. A first stream of content 410 flows from the home server 20 to the display 10. The first stream 410 comprises user provided content 60 (Fig. 3), depicted as a plurality of pictures 420 (corresponding to the user content 60 of Fig. 1), and an advertisement (ad) 430 (corresponding to the advertisement 80 of Fig. 1). A second stream of content 450 (corresponding to the content item 70 of Fig. 1) flows from the home server 20 to the television 310. The second stream of content 450 comprises a plurality of content items 460.

It is appreciated that the number and sequence of pictures 420, content items 450, and advertisements 430 depicted in Fig. 4 is depicted purely by way of example, and is not meant to be limiting in any way.

In yet another embodiment of the present invention, the display 10 may comprise any display in communication with the home server 20. For example and without limiting the generality of the foregoing, in a home environment there may be screens on home appliances and other devices, a screen on a refrigerator, washing machine, or freezer or other device. Any such screen may display the user content 60, the content item 70 and the advertisement 80, or any sub-combination thereof, as described herein.

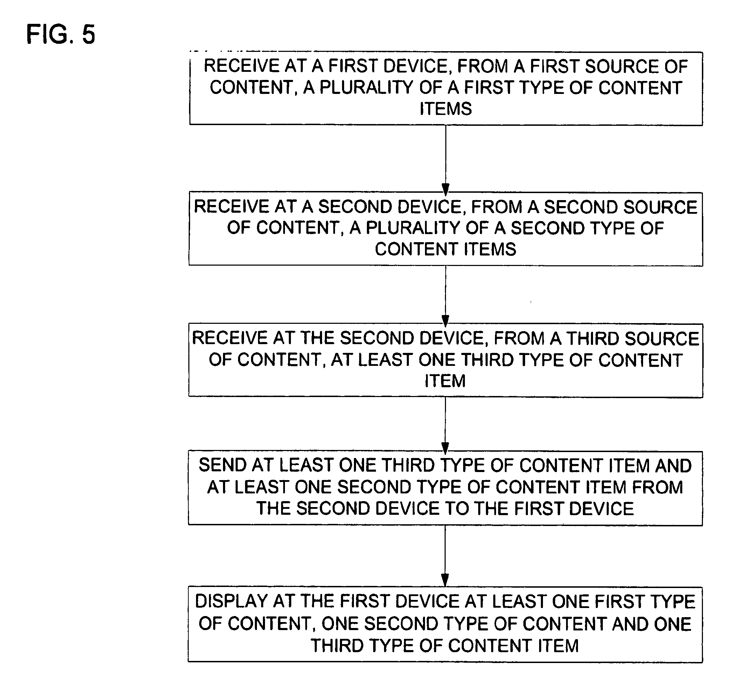

Reference is now made to Fig. 5, which is a simplified flowchart of a method of operation of the present invention. The method of Fig. 5 is believed to be self-explanatory in light of the above discussion.

It is appreciated that software components of the present invention may, if desired, be implemented in ROM (read only memory) form. The software components may, generally, be implemented in hardware, if desired, using conventional techniques.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the invention is defined only by the claims which follow:

## Claims

1. A method for displaying device shifted content, the method comprising:
providing a home server (20) that is a client of a content provider (30);
sending, by the home server (20), user provided content (60) to a first display (10);
receiving at the home server (20) a plurality of first content items (70), and at least one second, alternative content item (80) from the content provider (30);
streaming from the home server (20) to the first display (10) a stream comprising the user provided content (60); and
streaming from the home server (20) to a second display (310) a stream comprising said plurality of first content items (70) and the at least one alternative content item (80), the streaming occurring via either wired or wireless communication;
displaying the plurality of first content items (70) and the at least one alternative content item (80) on a second display (310);
in response to a user selection, device shifting the alternative content item (80) from displaying on the second display (310) to displaying on the first display (10),
wherein the device shifting of the alternative content item (80) from the second display (310) to the first display (10) comprises streaming from the home server (20) to the first display (10) a stream comprising the user provided content (60) and the selected alternative content item (80).

2. The method according to claim 1 and wherein the device shifting occurs upon display of the at least one alternative content item (80).

3. The method according to any of claim 1 - 2 and wherein device shifting the alternative content item (80) entails presenting the alternative content item for a longer time period than if the alternative content item were viewed in a non-device-shifted fashion.

4. The method according to any of claims 1 - 3 and wherein the device shifted alternative content item (80) comprises one of a time sensitive content item; location sensitive content item; and a device sensitive content item.

5. The method according to any of claims 1 - 4 and wherein the time shifting occurs upon display of the at least one alternative content item (80).

6. The method according to any of claims 1 - 5 and wherein the time shifting results from a user electing to time shift the alternative content item (80).

7. The method according to any of claims 1 - 6 and wherein time shifting the alternative content item (80) entails presenting the alternative content item for a longer time period than if the alternative content item were viewed in a non-time-shifted fashion.

8. The method according to any of claims 1 - 7 and wherein the time shifted alternative content item (80) comprises one of a time sensitive content item; location sensitive content item; and a device sensitive content item.

9. The method according to any of claims 1 - 8 and wherein the user is required to acknowledge viewing the alternative content item (80).

10. The method according to claim 9 and wherein the user is required to view fewer than a number of alternative content items in a set of alternative content items sent to the user, if the user acknowledges viewing the alternative content items.

11. The method according to any of claims 1 - 10 and wherein, if the alternative content item (80) is viewed as both a device shifted alternative content item (80) and as a time shifted alternative content item (80), the user is required to take an action in order to acknowledge that the alternative content item (80) has been viewed.

12. The method according to any of claims 1 - 11 and wherein the first display (10) comprises one of a digital picture frame, a monitor, a television, a mobile telephone, and an electronic book.

13. The method according to any of claims 1 - 12 and wherein the at least one alternative content item (80) comprises one of: video; text; an image; and a combination of video, text and images.

14. The method according to any of claims 1 - 13 and wherein the home server (20) receives the least one alternative content item (80) from a content provider comprising any one of a satellite television broadcaster; a cable television broadcaster; and an Internet content provider.

15. A system for displaying device shifted content, the system comprising:
a home server (20);
a transmitter disposed in the home server (20), operative to send user provided content (60) to a first display (10);
a receiver disposed in the home server (20) operative to receive a plurality of first content items (70), and at least one second, alternative content item (80);
wherein the home server (20) is adapted to :
stream from the home server (20) to the first display (10) a stream comprising user provided content (60);
stream from the home server (20) to a second display (310) a stream comprising a plurality of first content items (70) and at least one alternative content item (80);
in response to a user selection, to shift the alternative content item (80) from displaying on the second display (310) to displaying on the first display (10), wherein the device shifting of the alternative content item (80) from the second display (310) to the first display (10) comprises streaming from the home server (20) to the first display (10) a stream comprising the user provided content (60) and the selected alternative content item (80).

## Patentansprüche

1. Verfahren zum Anzeigen von geräteverschobenem Inhalt, wobei das Verfahren Folgendes beinhaltet:
Bereitstellen eines Heimservers (20), der ein Client eines Inhaltsanbieters (30) ist;
Senden, durch den Heimserver (20), von vom Benutzer bereitgestelltem Inhalt (60) zu einem ersten Display (10);
Empfangen, am Heimserver (20), mehrerer erster Inhaltselemente (70) und wenigstens eines zweiten, alternativen Inhaltselements (80) von dem Inhaltsanbieter (30);
Streamen, vom Heimserver (20) zum ersten Display (10), eines Stroms, der vom Benutzer bereitgestellten Inhalt (60) enthält; und
Streamen, vom Heimserver (20) zu einem zweiten Display (310), eines Stroms, der die mehreren ersten Inhaltselemente (70) und das wenigstens eine alternative Inhaltselement (80) enthält, wobei das Streamen über drahtgebundene oder drahtlose Kommunikation erfolgt;
Anzeigen der mehreren ersten Inhaltselemente (70) und des wenigstens einen alternativen Inhaltselements (80) auf einem zweiten Display (310);
Geräteverschieben, als Reaktion auf eine Benutzerwahl, des alternativen Inhaltselements (80) von Anzeige auf dem zweiten Display (310) auf Anzeige auf dem ersten Display (10),
wobei das Geräteverschieben des alternativen Inhaltselements (80) vom zweiten Display (310) auf das erste Display (10) das Streamen, vom Heimserver (20) auf das erste Display (10), eines Stroms beinhaltet, der den vom Benutzer bereitgestellten Inhalt (60) und das gewählte alternative Inhaltselement (80) enthält.

2. Verfahren nach Anspruch 1, wobei die Geräteverschiebung nach dem Anzeigen des wenigstens einen alternativen Inhaltselements (80) erfolgt.

3. Verfahren nach einem der Ansprüche 1-2, wobei das Geräteverschieben des alternativen Inhaltselements (80) das Präsentieren des alternativen Inhaltselements für eine längere Zeitdauer beinhaltet als dann, wenn das alternative Inhaltselement auf nicht geräteverschobene Weise betrachtet würde.

4. Verfahren nach einem der Ansprüche 1-3, wobei das geräteverschobene alternative Inhaltselement (80) ein zeitsensibles Inhaltselement, ortssensibles Inhaltselement oder gerätesensibles Inhaltselement beinhaltet.

5. Verfahren nach einem der Ansprüche 1-4, wobei die Zeitverschiebung nach der Anzeige des wenigstens einen alternativen Inhaltselements (80) erfolgt.

6. Verfahren nach einem der Ansprüche 1-5, wobei die Zeitverschiebung daher resultiert, dass ein Benutzer eine Zeitverschiebung des alternativen Inhaltselements (80) wählt.

7. Verfahren nach einem der Ansprüche 1-6, wobei die Zeitverschiebung des alternativen Inhaltselements (80) das Präsentieren des alternativen Inhaltselements für eine längere Zeitdauer beinhaltet als dann, wenn das alternative Inhaltselement auf nicht zeitverschobene Weise betrachtet würde.

8. Verfahren nach einem der Ansprüche 1-7, wobei das zeitverschobene alternative Inhaltselement (80) ein zeitsensibles Inhaltselement, ortssensibles Inhaltselement oder gerätesensibles Inhaltselement beinhaltet.

9. Verfahren nach einem der Ansprüche 1-8, wobei der Benutzer das Betrachten des alternativen Inhaltselements (80) bestätigen muss.

10. Verfahren nach Anspruch 9, wobei der Benutzer weniger als eine Anzahl von alternativen Inhaltselementen in einem zum Benutzer gesendeten Satz von alternativen Inhaltselementen betrachten muss, wenn der Benutzer die Betrachtung der alternativen Inhaltselemente bestätigt.

11. Verfahren nach einem der Ansprüche 1-10, wobei der Benutzer, wenn das alternative Inhaltselement (80) als geräteverschobenes alternatives Inhaltselement (80) und als zeitverschobenes alternatives Inhaltselement (80) betrachtet wird, eine Aktion ausführen muss, um zu bestätigen, dass das alternative Inhaltselement (80) betrachtet wurde.

12. Verfahren nach einem der Ansprüche 1-11, wobei das erste Display (10) einen digitalen Bilderrahmen, einen Monitor, einen Fernseher, ein Mobiltelefon oder ein elektronisches Buch umfasst.

13. Verfahren nach einem der Ansprüche 1-12, wobei das wenigstens eine alternative Inhaltselement (80) Video, Text, Bild oder eine Kombination aus Video, Text und Bildern beinhaltet.

14. Verfahren nach einem der Ansprüche 1-13, wobei der Heimserver (20) wenigstens ein alternatives Inhaltselement (80) von einem Inhaltsanbieter empfängt, das einen Satellitenfernsehsender; Kabelfernsehsender oder Internet-Inhaltsanbieter umfasst.

15. System zum Anzeigen von geräteverschobenem Inhalt, wobei das System Folgendes umfasst:
einen Heimserver (20);
einen im Heimserver (20) angeordneten Sender zum Senden von vom Benutzer bereitgestelltem Inhalt (60) zu einem ersten Display (10);
einen im Heimserver (20) angeordneten Empfänger zum Empfangen mehrerer erster Inhaltselemente (70) und wenigstens eines zweiten alternativen Inhaltselements (80);
wobei der Heimserver (20) ausgelegt ist zum:
Streamen, vom Heimserver (20) zum ersten Display (10), eines Stroms, der vom Benutzer bereitgestellten Inhalt (60) enthält;
Streamen, vom Heimserver (20) zum zweiten Display (310), eines Stroms, der mehrere erste Inhaltselemente (70) und wenigstens ein alternatives Inhaltselement (80) umfasst;
Verschieben, als Reaktion auf eine Benutzerauswahl, des alternativen Inhaltselements (80) von Anzeige auf dem zweiten Display (310) auf Anzeige auf dem ersten Display (10), wobei die Geräteverschiebung des alternativen Inhaltselements (80) vom zweiten Display (310) auf das erste Display (10) das Streamen vom Heimserver (20) zum ersten Display (10) eines Stroms beinhaltet, der den vom Benutzer bereitgestellten Inhalt (60) und das gewählte alternative Inhaltselement (80) beinhaltet.

## Revendications

1. Procédé d'affichage de contenu modifié par un dispositif, le procédé consistant à :
fournir un serveur domestique (20), lequel représente un dispositif client d'un fournisseur de contenu (30) ;
envoyer, par le biais du serveur domestique (20), du contenu délivré par l'utilisateur (60), à un premier écran d'affichage (10) ;
recevoir, au niveau du serveur domestique (20), une pluralité de premiers éléments de contenu (70), et au moins un second élément de contenu alternatif (80) en provenance du fournisseur de contenu (30) ;
diffuser en continu, du serveur domestique (20) au premier écran d'affichage (10), un flux comprenant le contenu délivré par l'utilisateur (60) ; et
diffuser en continu, du serveur domestique (20) à un second écran d'affichage (310), un flux comprenant ladite pluralité de premiers éléments de contenu (70) et ledit au moins un élément de contenu alternatif (80), la diffusion en continu étant mise en oeuvre par l'intermédiaire d'une communication filaire ou sans fil ;
afficher la pluralité de premiers éléments de contenu (70) et ledit au moins un élément de contenu alternatif (80) sur un second écran d'affichage (310) ;
en réponse à une sélection d'utilisateur, modifier par le dispositif l'élément de contenu alternatif (80), d'un affichage sur le second écran d'affichage (310) à un affichage sur le premier écran d'affichage (10) ;
dans lequel la modification par le dispositif de l'élément de contenu alternatif (80) du second écran d'affichage (310) au premier écran d'affichage (10) consiste à diffuser en continu, du serveur domestique (20) au premier écran d'affichage (10), un flux comprenant le contenu délivré par l'utilisateur (60) et l'élément de contenu alternatif sélectionné (80).

2. Procédé selon la revendication 1, dans lequel la modification par le dispositif est occasionnée lors de l'affichage dudit au moins un élément de contenu alternatif (80).

3. Procédé selon l'une quelconque des revendications 1 à 2, dans lequel la modification par le dispositif de l'élément de contenu alternatif (80) consiste à présenter l'élément de contenu alternatif pendant une période de temps plus longue que si l'élément de contenu alternatif était affiché sans modification par le dispositif.

4. Procédé selon l'une quelconque des revendications 1 à 3, dans lequel l'élément de contenu alternatif modifié par dispositif (80) comprend l'un parmi un élément de contenu sensible au temps ; un élément de contenu sensible à l'emplacement ; et un élément de contenu sensible au dispositif.

5. Procédé selon l'une quelconque des revendications 1 à 4, dans lequel la modification temporelle est occasionnée lors de l'affichage dudit au moins un élément de contenu alternatif (80).

6. Procédé selon l'une quelconque des revendications 1 à 5, dans lequel la modification temporelle résulte de la décision d'un utilisateur de modifier temporellement l'élément de contenu alternatif (80).

7. Procédé selon l'une quelconque des revendications 1 à 6, dans lequel la modification temporelle de l'élément de contenu alternatif (80) consiste à présenter l'élément de contenu alternatif pendant une période de temps plus longue que si l'élément de contenu alternatif était affiché sans modification temporelle.

8. Procédé selon l'une quelconque des revendications 1 à 7, dans lequel l'élément de contenu alternatif modifié temporellement (80) comprend l'un parmi un élément de contenu sensible au temps ; un élément de contenu sensible à l'emplacement ; et un élément de contenu sensible au dispositif.

9. Procédé selon l'une quelconque des revendications 1 à 8, dans lequel l'utilisateur est invité à signaler la visualisation de l'élément de contenu alternatif (80).

10. Procédé selon la revendication 9, dans lequel l'utilisateur est invité à visualiser moins qu'un nombre d'éléments de contenu alternatifs dans un ensemble d'éléments de contenu alternatifs envoyés à l'utilisateur, si l'utilisateur signale la visualisation des éléments de contenu alternatifs.

11. Procédé selon l'une quelconque des revendications 1 à 10, dans lequel, si l'élément de contenu alternatif (80) est visualisé à la fois sous la forme d'un élément de contenu alternatif modifié par dispositif (80) et d'un élément de contenu alternatif modifié temporellement (80), l'utilisateur est tenu de prendre une mesure visant à signaler que l'élément de contenu alternatif (80) a été visualisé.

12. Procédé selon l'une quelconque des revendications 1 à 11, dans lequel le premier écran d'affichage (10) comprend l'un parmi une trame d'image numérique, un moniteur, un téléviseur, un téléphone mobile et un livre électronique.

13. Procédé selon l'une quelconque des revendications 1 à 12, dans lequel ledit au moins un élément de contenu alternatif (80) comprend l'un parmi : de la vidéo ; du texte ; une image, et une combinaison de vidéo, de texte et d'images.

14. Procédé selon l'une quelconque des revendications 1 à 13, dans lequel le serveur domestique (20) reçoit ledit au moins un élément de contenu alternatif (80) à partir d'un fournisseur de contenu comprenant l'un quelconque parmi un diffuseur de télévision par satellite, un diffuseur de télévision par câble, et un fournisseur de contenu Internet.

15. Système d'affichage de contenu modifié par un dispositif, le système comprenant :
un serveur domestique (20) ;
un émetteur agencé dans le serveur domestique (20), exploitable de manière à envoyer du contenu délivré par l'utilisateur (60) à un premier écran d'affichage (10) ;
un récepteur agencé dans le serveur domestique (20), exploitable de manière à recevoir une pluralité de premiers éléments de contenu (70), et au moins un second élément de contenu alternatif (80) ;
dans lequel le serveur domestique (20) est apte à :
diffuser en continu, du serveur domestique (20) au premier écran d'affichage (10), un flux comprenant le contenu délivré par l'utilisateur (60) ;
diffuser en continu, du serveur domestique (20) à un second écran d'affichage (310), un flux comprenant une pluralité de premiers éléments de contenu (70) et au moins un élément de contenu alternatif (80) ;
en réponse à une sélection d'utilisateur, modifier l'élément de contenu alternatif (80), d'un affichage sur le second écran d'affichage (310) à un affichage sur le premier écran d'affichage (10), dans lequel la modification par le dispositif de l'élément de contenu alternatif (80) du second écran d'affichage (310) au premier écran d'affichage (10) consiste à diffuser en continu, du serveur domestique (20) au premier écran d'affichage (10), un flux comprenant le contenu délivré par l'utilisateur (60) et l'élément de contenu alternatif sélectionné (80).
